# EUROPÄISCHE PATENTSCHRIFT

(11) **EP 2 239 235 B1**
(45) Veröffentlichungstag und Bekanntmachung des Hinweises auf die Patenterteilung: **25.07.2012**
(21) Anmeldenummer: 10003728.2
(22) Anmeldetag: 07.04.2010
(51) Int. Cl.: C02F 3/28, C02F 3/00, C02F 3/08, C02F 3/30

(54) **Verfahren zur Verwirbelung von Aufwuchskörpern in einem Klärbecken und zugehöriges Klärbecken**
Method for swirling culture bodies in a clarifier and accompanying clarifier
Procédé de tourbillonnement de corps de croissance dans un bassin d'épuration et bassin d'épuration correspondant

(30) Priorität: 07.04.2009 DE 102009016397
(43) Veröffentlichungstag der Anmeldung: 13.10.2010
(73) Patentinhaber: WILO SE, 44263 Dortmund (DE)
(72) Erfinder: Langguth, Stefan, 95145 Oberkotzau (DE); Wirth, Hermann, 95233 Helmbrechts (DE)
(74) Vertreter: Cohausz Hannig Borkowski Wißgott

(56) Entgegenhaltungen:
- WO-A1-02/100784
- DE-A1- 3 144 111
- DE-A1- 19 516 750
- JP-A- 2005 296 850
- US-A- 2 647 733
- US-A- 2 991 983

## Beschreibung

Die Erfindung betrifft ein Verfahren zur Verwirbelung von Aufwuchskörper in einem mit Abwasser gefüllten Klärbecken, in dem eine Totzone schwimmender Aufwuchskörper gebildet ist und in dem zumindest ein Umwälzorgan angeordnet ist.

In biologischen Abwasserreinigungsanlagen für die Wasseraufbereitung ist es bekannt, schwimmfähige und verwirbelbare Trägermaterialien zu verwenden, auf denen Mikroorganismen aufwachsen können. Die so entstehende Biomasse dient der biologischen Reinigung des Abwassers. Die Aufwuchskörper sind kleine und stark strukturierte Kunststoffkörper, die den Mikroorganismen die erforderliche Fläche für den biologischen Rasen bieten. Derartige Aufwuchskörper werden in sogenannten Schwebebettverfahren oder Wirbelbettverfahren der Klärtechnik verwendet.

Bei diesen Verfahren wird Abwasser aus der Vorklärung in ein Klärbecken geleitet, in dem Aufwuchskörper in einem Schwebebett schwimmen. Dieses Schwebebett stellt eine Totzone dar, da der Grad der Abwasserreinigung in diesem Bereich reduziert ist. Unter dem Schwebebett kann eine Belüftung installiert werden, die zum einen die Biologie mit Sauerstoff versorgt und zum anderen eine Strömung erzeugt, die die Aufwuchskörper verwirbelt und auf diese Weise im Klärbecken verteilt. Für den Abwasserreinigungsprozess sind jedoch auch Verfahrensstufen (Denitrifikation) ohne Belüftung notwendig. Hier wird die Verwirbelung heute mit konventionellen Tauchrührwerken durchgeführt.

Nachteilig ist bei diesem Verfahren, dass zur Strömungserzeugung energieintensive Tauchmotorrührwerke in großer Anzahl benötigt werden. Dies führt zu hohen Kosten im Bau der Abwasseranlage, dem Betrieb und schließlich auch der Wartung. Dies ist zum einen bedingt durch die Gerätekosten, zum anderen durch den personellen Aufwand in Installation und Wartung. Ein weiterer Nachteil dieses Verfahrens ist, dass die Strömung im Wesentlichen waagerecht unter der Wasseroberfläche verläuft, so dass sich die Aufwuchskörper an der Wasseroberfläche ansammeln und damit keine gleichmäßige Verteilung und folglich keine optimale Abwasserreinigung im Becken erreicht wird. Das Ansammeln von Aufwuchskörpern an der Wasseroberfläche birgt des Weiteren die Gefahr, dass die Biomasse mangels Benetzung mit Wasser austrocknet und die aufgewachsenen Mikroorganismen absterben.

Die japanische Patentanmeldung JP 2005-296850 A beschreibt ein Verfahren zur Energieeinsparung bei einem Rührantrieb, dessen propellerartiger Rührer am Ende eines sich langsam drehenden Schafts angeordnet ist und in einen abgeschlossenen Reaktionstank hineinragt. Die Energieeinsparung wird dadurch erreicht, dass der Rührer in einem Rohr dreht, das unterhalb der Wasseroberfläche beginnt und sich bis zum Boden des Tanks erstreckt, so dass in dem Rohr eine Strömung in Richtung Boden erzeugt wird und Flüssigkeit oben wieder in das Rohr einströmt, so dass eine Umwälzung des Tankinhalts erfolgt.

Die internationale Patentanmeldung WO 02/100784 A1 offenbart eine anaerobe Fermentierungsvorrichtung, bei der Abwasser in einem Fermenter rezirkulierend umgepumpt wird, wobei Abwasser aus dem Fermenter mittels einer Pumpe abgesaugt und das Wiedereinbringen über eine Düse erfolgt, die in ein in dem Abwasser unterhalb seines Flüssigkeitspegels angeordneten Strömungsrohr hineinragt.

Es ist Aufgabe der Erfindung, ein Verfahren sowie ein Klärbecken zur Anwendung des Verfahrens bereitzustellen, mit dem eine stärkere Verwirbelung der Aufwuchskörper innerhalb des mit Abwasser gefüllten Klärbeckens erreicht wird, so dass eine homogene Verteilung der Aufwuchskörper gewährleistet ist und eine Austrocknung der Biomasse verhindert wird.

Diese Aufgabe wird durch die Merkmale des Verfahrens des Anspruchs 1 sowie durch die Verwendung einer Anordnung mit den Merkmalen des Anspruchs 4 gelöst.

Erfindungsgemäß wird ein zur Verwirbelung von Aufwuchskörper in einem mit Abwasser gefüllten Klärbecken vorgeschlagen, in dem eine Totzone schwimmender Aufwuchskörper gebildet ist und in dem zumindest ein Umwälzorgan angeordnet ist, wobei das Umwälzorgan in einem Abstand von mindestens 30cm unterhalb der Wasseroberfläche über eine parallel zur Wasseroberfläche ausgerichtete Saugöffnung eines Strömungsrohres die Aufwuchskörper aus der Totzone absaugt und durch eine druckseitige Öffnung des Strömungsrohres in den mittleren und/ oder unteren Bereich des Klärbeckens einbringt.

Das Umwälzorgan bewirkt eine Strömung, die in dem Abwasser schwimmenden Aufwuchskörper stetig in Bewegung hält. Die parallele Ausrichtung der Saugöffnung zur Wasseroberfläche gewährleistet ein gleichmäßiges und effektives Ansaugen der Aufwuchskörper. Ferner gewährleistet die Anordnung der Saugöffnung in einem Abstand von mindestens 30cm unterhalb der Oberfläche, dass genügend Aufwuchskörper angesaugt und gerade die oberflächennahen Aufwuchskörper, die stets auszutrocknen drohen, abgesaugt werden. Ein zu kleiner Abstand zwischen Saugöffnung und Wasseroberfläche würde dazu führen, dass die oberflächennahen Aufwuchskörper schneller abgesaugt werden als Aufwuchskörper nachfließen können, so dass das Umwälzorgan nicht seine volle Leistung erbringen kann. Wird die Saugöffnung zu nahe an der Oberfläche platziert führt dies zu einem für den Prozess schädlichen Lufteintrag ins Abwasser. Besonders vorteilhaft ist dabei, dass die sich an der Oberfläche anlagernden Aufwuchskörper abgesaugt werden und den tieferen Wasserschichten zugeführt werden. Dies führt zu einer homogenen Verteilung der Aufwuchskörper innerhalb des Klärbeckens. Das Absaugen der oberflächennahen Aufwuchskörper gewährleistet wiederum, dass sich diese nicht zu lange an der Wasseroberfläche aufhalten und dadurch, insbesondere unter Sonneneinstrahlung austrocknen. Die Biomasse bleibt auf diese Art gesund und steht der Wasserreinigung vollständig zur Verfügung.

Da sich durch das Absaugen der oberflächennahen Aufwuchskörper und Verwirbelung dieser in tiefer liegende Wasserschichten zu einer homogenen Verteilung der Aufwuchskörper im Klärbecken führt, kann gleichzeitig auf zusätzliche Tauchmotorrührwerke verzichtet werden, so dass eine erhebliche Energieeinsparung von mehr als 50% erreicht werden kann. Besonders vorteilhaft ist bei dem Verfahren, dass die abgesaugten Aufwuchskörper und das Abwasser nicht aus dem Klärbecken ausgetragen werden. Es erfolgt vielmehr eine Verwirbelung der Aufwuchskörper unmittelbar im Klärbecken unterhalb des Umwälzorgans. Auf aufwändige in dem Becken montierte Rohrleitungen zur Strömungsführung kann dadurch verzichtet werden.

Das Umwälzorgan wird zur Beibehaltung des Abstands zwischen Saugöffnung und Wasseroberfläche in Abhängigkeit des Wasserstands automatisch nachgeführt. Damit ist gewährleistet, dass das erfindungsgemäße Verfahren stets mit gleichem Wirkungsgrad für eine Verwirbelung der Aufwuchskörper sorgt. Insbesondere kann bei steigendem Wasserstand in dem Klärbecken das Umwälzorgan angehoben werden, bei einem fallenden Wasserstand abgesenkt werden.

Die Nachführung des Umwälzorgans kann auf besonders einfache Weise dadurch erreicht werden, dass das Umwälzorgan an zumindest einer Führungsstange beweglich geführt wird. Die Führungsstange kann Teil einer Haltevorrichtung sein, mittels welcher das Umwälzorgan an der Wand des Klärbeckens befestigt oder befestigbar ist. Mittels der Führungsstange kann gewährleistet werden, dass das Umwälzorgan in horizontaler Richtung relativ zur Wand des Klärbeckens stets gleich ausgerichtet ist, das heißt die Strömung stets in dieselbe Richtung gelenkt wird. In vertikaler Richtung kann eine Fixierung des Umwälzorgans dadurch erfolgen, dass es von einem Haltemittel, insbesondere einem Seil oder einer Kette gehalten ist, wobei das Haltemittel außerhalb des Klärbeckens, beispielsweise an einem Hebekran befestigt ist. Durch Hochziehen oder Absenken des Haltemittels kann auch das Umwälzorgan im Klärbecken in vertikaler Richtung positioniert werden, wobei es bei einer derartigen Vertikalbewegung an der Führungsstange gleitend geführt sein kann. Des Weiteren kann der Auslassbogen der druckseitigen Öffnung des Umwälzorgans um die Achse des geraden Teils des Strömungsrohres 3 geschwenkt werden. Hierdurch kann die Strömungsrichtung im Klärbecken gezielt ausgerichtet werden.

Um eine optimale Verwirbelung der Aufwuchskörper zu erreichen, kann die aus dem Strömungsrohr austretende Strömung vorzugsweise senkrecht oder schräg nach unten gerichtet sein. Dies bewirkt zuverlässig eine gleichmäßige Verteilung der Aufwuchskörper in allen Wasserschichten des Klärbeckens, da diese wieder aufsteigen. Alternativ kann die Strömung jedoch auch horizontal aus dem Strömungsrohr austreten.

Weiterhin wird ein mit Abwasser gefülltes Klärbecken, insbesondere eine spezielle Anordnung in einem Klärbecken vorgeschlagen, in dem verwirbelbare Aufwuchskörper in einer Totzone schwimmen und in dem zumindest ein Umwälzorgan zur Verwirbelung dieser Aufwuchskörper angeordnet ist, wobei das Umwälzorgan ein Strömungsrohr umfasst, in dem eine Tauchmotorpumpe angeordnet ist, wobei sich das Strömungsrohr zumindest teilweise in der Totzone befindet und eine Saugöffnung aufweist, die parallel zur Wasseroberfläche ausgerichtet und in einem Abstand zur Wasseroberfläche von mindestens 30 cm angeordnet ist, und dass das Strömungsrohr eine druckseitige Öffnung außerhalb der Totzone aufweist, durch die die abgesaugten Aufwuchskörper in den mittleren oder unteren Bereich des Klärbeckens einbringbar sind.

Besonders wesentlich ist bei dem erfindungsgemäßen Verfahren und der erfindungsgemäßen Anordnung eines Umwälzorgans innerhalb eines Klärbeckens, dass die saugseitige Öffnung des Strömungsrohrs parallel zur Wasseroberfläche ausgerichtet ist. Dies gewährleistet, dass sich unmittelbar vor der Saugöffnung des Strömungsrohres ein trichterförmiger Sog ausbildet, durch den die Aufwuchskörper gleichmäßig in das Strömungsrohr eingesaugt werden. Ein Mindestabstand von 30 cm zur Wasseroberfläche gewährleistet, dass für die abgesaugten Aufwuchskörper ausreichend Aufwuchskörper nachfließen können.

In einer einfachen Ausführungsvariante kann das Umwälzorgan senkrecht zur Wasseroberfläche angeordnet sein, d.h. dass die Achse desjenigen geraden, zylindrischen Strömungsrohrabschnitts des Strömungsrohres, in dem die Tauchmotorpumpe angeordnet ist, zur Wasseroberfläche im Wesentlichen rechtwinklig steht. Es bedarf dann keiner zusätzlichen Maßnahmen, um die Saugöffnung des Strömungsrohres parallel zur Wasseroberfläche auszurichten.

In einer alternativen Ausführungsvariante kann das Umwälzorgan mit der Achse des geraden Strömungsrohrabschnitts zur Wasseroberfläche winklig angeordnet sein. Der saugseitige Endabschnitt des Strömungsrohres ist dann derart gekrümmt, dass die Saugöffnung parallel zur Wasseroberfläche ausgerichtet ist, so dass ein maximaler Sog an der Wasseroberfläche entsteht.

In einer vorteilhaften Weiterbildung der erfindungsgemäßen Anordnung kann das Strömungsrohr des Umwälzorgans einen gekrümmten druckseitigen Endabschnitt aufweisen. Gegenüber einem ausschließlich geraden Strömungsrohr mit koaxial zur Achse des geraden Strömungsrohrabschnitts ausgerichteter druckseitiger Öffnung, durch welche die Aufwuchskörper in der Strömung des Umwälzorgans senkrecht nach unten gefördert werden können, ermöglicht ein gekrümmter druckseitiger Endabschnitt, dass die Strömung gezielt umgelenkt wird. Bei einer Umlenkung der Strömung um 90° kann diese dabei horizontal im Becken ausgebildet werden. Es ist jedoch von Vorteil, die Strömung des Umwälzorgans schräg durch die Wasserschichten nach unten zu richten, damit im gesamten Klärbecken eine homogene Verteilung der Aufwuchskörper erreicht wird. Dies wäre bei einer rein horizontalen Strömung nicht der Fall, da die Aufwuchskörper nicht in den Bereich des Klärbeckens unterhalb der Strömung gelangen.

Besonders vorteilhaft ist es, wenn zwei oder mehr Umwälzorgane in dem Klärbecken angeordnet sind. Hiermit wir eine noch gleichmäßigere Verteilung der Aufwuchskörper innerhalb des Klärbeckens sowie eine bessere Verwirbelung derselben bewirkt. Wie viele Umwälzorgane verwendet werden müssen hängt von der Beckengeometrie und der Beckengröße ab. In kleinen Becken kann ein Umwälzorgan ausreichen.

Weitere Vorteile und Merkmale des erfindungsgemäßen Verfahrens sowie der erfindungsgemäßen Anordnung eines Umwälzorgans innerhalb eines Klärbeckens werden anhand der nachfolgenden Beschreibung von Beispielen und der beigefügten Figuren ersichtlich. Es sei angemerkt, dass die einzelnen Ausführungsvarianten für sich betrachtet aber auch in Kombination Verwendung finden können.

Es zeigen
- Figur 1:: In Klärbecken 1 angeordnetes Umwälzorgan 100 mit senkrecht gerichteter Strömung
- Figur 2:: Klärbecken 1 mit Umwälzorgan 200 mit umgelenkter Strömung und Haltevorrichtung für Beckenwand 15
- Figur 3:: Umwälzorgan mit gekrümmtem druckseitigem und gekrümmtem saugseitigen Endbereich des Strömungsrohrs
- Figur 4:: Klärbecken 1 mit zwei Umwälzorganen in Seitansicht
- Figur 5:: Klärbecken 1 mit zwei Umwälzorganen in Draufsicht

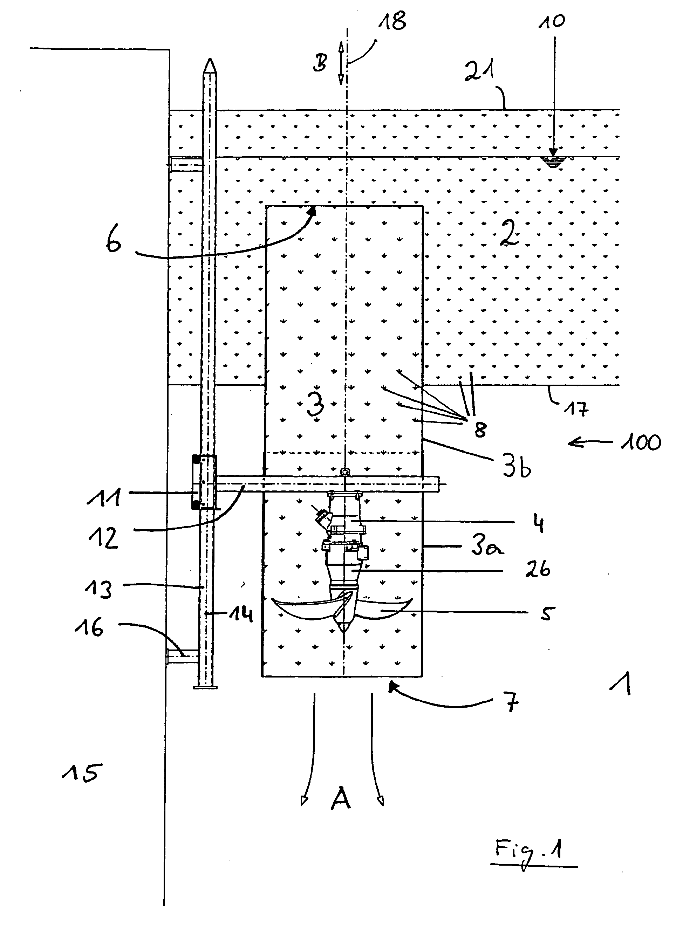

Figur 1 zeigt ein mit Abwasser gefülltes Klärbecken 1, an dessen Wasseroberfläche 10 sich eine Totzone 2 aus mit Biomasse bewachsenen Aufwuchskörpern 8 befindet. Die Totzone kann in der Höhe mehrere Meter betragen und damit über 50% der Wasserhöhe des Klärbeckens ausmachen. Die Menge der Aufwuchskörper kann einen Volumenanteil von 10 bis 70% des Klärbeckens ausmachen. Die Totzone 2 ist nach oben hin durch die Grenzfläche 21, nach unten hin durch die Grenzfläche 17 begrenzt, wobei die untere Grenzfläche rein schematisch zu betrachten ist. Im Falle der Verwirbelung der Aufwuchskörper ist kein klarer Grenzübergang zwischen einer aufwuchskörperfreien Abwasserzone und der Totzone vorliegend.

Weiterhin ist in dem Klärbecken 1 ein Umwälzorgan 100 angeordnet. Das Umwälzorgan 100 umfasst ein Strömungsrohr 3, in dessen geradem Rohrabschnitt 3a eine Tauchmotorpumpe angeordnet ist. Die Tauchmotorpumpe besteht aus einem Tauchmotor 4, vorzugsweise einem Getriebe 26 und einem Axiallaufrad 5. Die Tauchmotorpumpe wird in axialer Richtung vom Abwasser respektive den Aufwuchskörpern umströmt. Sie ist mechanisch an einem Tragarm 12 befestigt, welcher auch das Strömungsrohr 3 trägt.

Das Strömungsrohr 3 wird in dieser Ausführungsvariante ausschließlich von geraden Abschnitten 3a, 3b gebildet. Das Strömungsrohr 3 ist teilweise innerhalb der Totzone 2 angeordnet, d.h., dass sich eine Saugöffnung 6 innerhalb der Totzone befindet. Das Strömungsrohr 3 weist in Strömungsrichtung eine druckseitige Öffnung 7 außerhalb der Totzone 2 auf, durch die das geförderte Abwasser respektive die von der Wasseroberfläche abgesaugten Aufwuchskörper 8 austreten. Die Saugöffnung 6 ist parallel zur Wasseroberfläche 10 ausgerichtet. Dies sorgt für ein gleichmäßiges Ansaugen der Körper 8. Der Abstand zwischen Saugöffnung 6 und Wasseroberfläche 10 ist abhängig vom gewählten Rohrdurchmesser, sollte jedoch mindestens 30 cm betragen, damit ein kontinuierliches Nachfließen der Aufwuchskörper 8 gewährleistet ist. Der Abstand hängt vom Ansaugverhalten, d.h. vom Rohrdurchmesser und der Strömungsgeschwindigkeit ab und beträgt zwischen 30 cm und 60 cm. Damit ist gewährleistet, dass auch die obersten, austrockungsgefährdeten Aufwuchskörper 8 eingesaugt werden.

An dem Tragarm 12 ist ein Haltemittel 18 in Gestalt einer Kette oder eines Seils befestigt, mittels welchem das Umwälzorgan 100 in Pfeilrichtung B aus dem Klärbecken 1 hochgehoben oder in dieser abgesenkt werden kann. Zur Ausrichtung des Umwälzorgans 100 innerhalb des Klärbeckens 1 ist es mit einem Tragarm 12 an einer Haltevorrichtung 11, 13, 16 mechanisch befestigt, welche wiederum an der Klärbeckenwand 15 montiert ist.

Der die Tauchmotorpumpe umgebende Rohrabschnitt 3a des Strömungsrohrs 3 ist um einen geraden Rohrabschnitt 3b in Richtung der Wasseroberfläche 10 verlängert. Damit kann die Tauchmotorpumpe tiefer im Klärbecken 1 angeordnet werden. Das Strömungsrohr 3 kann damit in seiner axialen Länge frei gewählt werden. Der Tragarm 12 ist an seinem einen Ende am Strömungsrohrs 3 angebracht. An seinem anderen Ende ist der Tragarm 12 an einem Führungsschlitten 11 befestigt, welcher beweglich an einer Führungsstange 13 geführt ist. Der Führungsschlitten 11 kann entlang der Achse 14 der Führungsstange 13 bewegt werden, so dass ein Hochziehen und Absenken des Umwälzorgans 100 möglich ist. Die Führungsstange 13 ist über Querträger 16 fest mit der Wand 15 des Klärbeckens 1 verbunden.

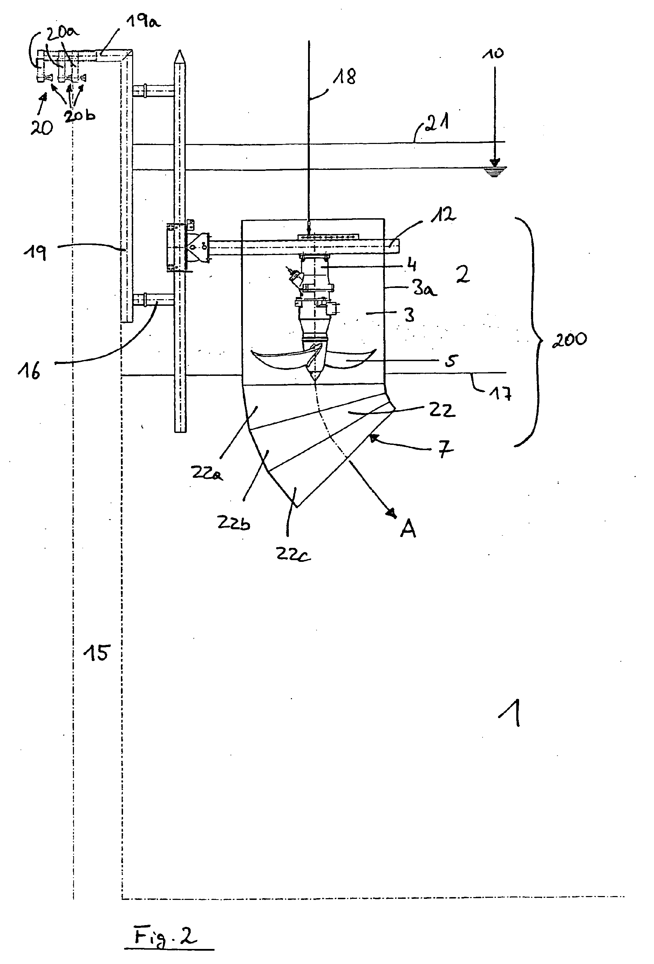

Figur 2 zeigt eine zweite Ausführungsvariante des Umwälzorgans 200 und der Haltevorrichtung. Das Strömungsrohr 3 weist an seinem druckseitigen Endabschnitt 22 eine Krümmung auf, aufgrund derer die Strömung A gegenüber der Vertikalen in Abhängigkeit der Beckengeometrie um 0-90°, vorzugsweise 30-45° umgelenkt wird. Hierdurch wird eine Zirkulation des Abwassers innerhalb des Beckens 1 gewährleistet. Die Krümmung wird durch Krümmersegmente 22a, 22b, 22c erzielt.

Die Tauchmotorpumpe ist auch in der Ausführungsvariante gemäß Figur 2 vollständig in dem geraden Rohrabschnitt 3a des Strömungsrohrs 3 angeordnet. Strömungsrohr 3 und Tauchmotorpumpe sind an dem Tragarm 12 fest montiert. Der druckseitige Auslassbogen 22 des Umwälzorgans 200 kann um die Führungsstange 13 geschwenkt werden.

Im Gegensatz zur Ausführungsvariante gemäß Figur 1 sind die Querträger 16 nicht unmittelbar an der Wand 15 des Klärbeckens 1 montiert sondern mit einem Halterahmen 19, 19a verbunden, mittels welchem das Umwälzorgan an die Beckenwand 15 gehängt werden kann. Der Halterahmen besteht aus zwei Holmen 19 mit nicht dargestellten Querverbindern, an die sich an ihrem oben liegenden Ende zwei waagerechte Kragträger 19a anschließen, von denen nur einer gezeigt ist. Die Länge der Kragträger 19a ist abhängig von der Stärke der Klärbeckenwand 15. Die zwei Kragträger 19a sind selbst teleskopierbar. In Figur 2 sind drei verschiedene Stellungen angedeutet. An die Kragträger 19a schließt sich an ihrem anderen Ende jeweils ein Befestigungsmittel 20 an, mittels welchem sich die Haltevorrichtung an der Außenseite der Beckenwand 15 abstützt.

Die Befestigungsmittel 20 bestehen jeweils aus einer sich stirnseitig an den jeweiligen Kragträger 19a anschließenden, nach unten gerichteten Trägerverlängerung 20a, welche beabstandet zur Beckenwand 15 gehalten ist, und einem Stützelement 20b, das sich am zur Beckenwand 15 gerichteten freien Ende der Trägerverlängerung 20a anschließt und mittels welchem sich die Trägerverlängerung 20a gegen die Beckenwand 15 außenseitig abstützt.

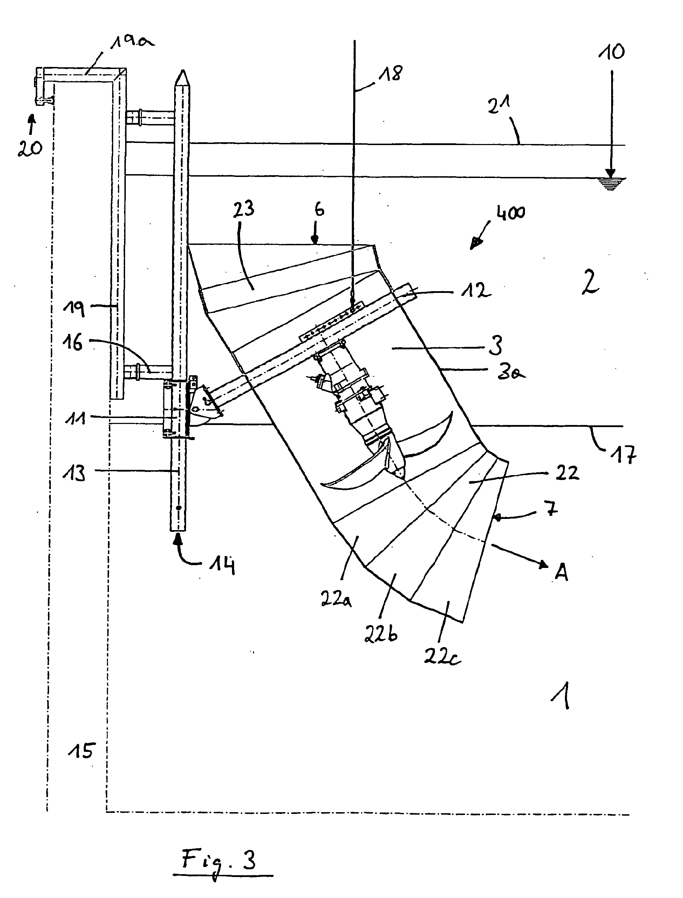

Figur 3 zeigt die Anordnung eines Umwälzorgans 400 in einem Klärbecken 1 gemäß einer Ausführungsvariante, in der die Rotationsachse des Laufrades 5 und damit die Strömungsrichtung im geraden Endabschnitt 3a des Strömungsrohres 3 in einem Winkel von vorzugsweise ca. 30° zur Wasseroberfläche 10 liegt. Der Winkel kann jedoch je nach Anwendungsfall beliebig gewählt werden. Zur Ausbildung eines zur Wasseroberfläche 10 parallelen Einsaugbereichs, respektive einer entsprechenden Saugöffnung 6 des Strömungsrohres 3 ist der saugseitige Endabschnitt 23 des Strömungsrohres 3 gekrümmt. An seinem druckseitigen Endabschnitt 22 weist das Strömungsrohr 3 ebenfalls eine Krümmung auf. Die Krümmung wird beispielhaft mittels Krümmersegmente 22a, 22b und 22c bewirkt. Die druckseitige Krümmung des Endabschnitts 22 bringt eine Umlenkung der Strömung A um weitere 30°. Auch hier kann der Winkel je nach Anwendungsfall beliebig gewählt werden.

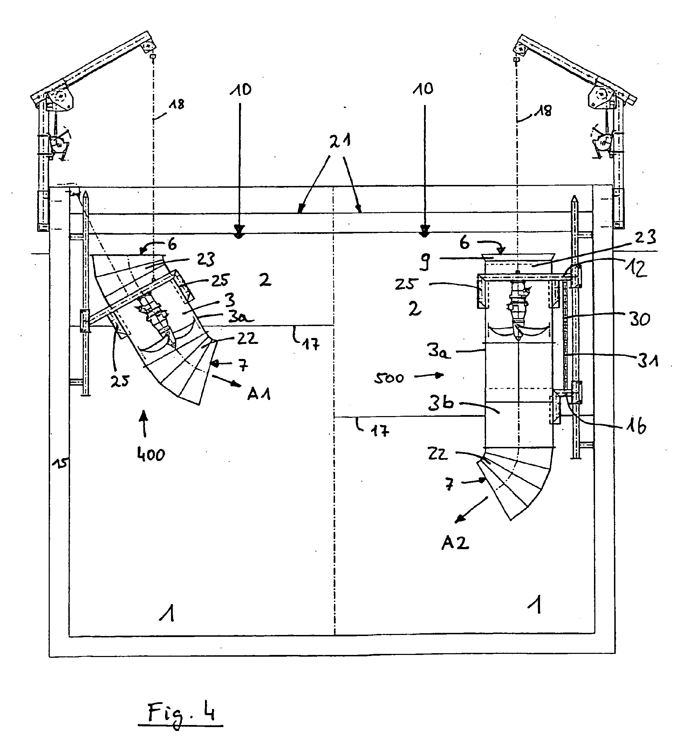

Figur 4 zeigt eine Seitenansicht in zwei Klärbecken 1 hinein, in denen jeweils ein Umwälzorgane 400, 500 angeordnet ist. Die Totzonen 2 besitzen unterschiedliche Höhen. Entsprechend der Höhe bzw. Dicke der Totzone 2 kann die axiale Länge des Strömungsrohrs 3 gewählt werden. Das linksseitige Umwälzorgan 400 ist mit zusätzlichen Halteelementen 25, die am Außenumfang des geraden Abschnitts 3a des Strömungsrohres 3 angreifen, mit dem Tragarm 12 verbunden.

Das rechtsseitig in dem Klärbecken 1 dargestellte Umwälzorgan 500 weist ein Strömungsrohr 3 auf, das um einen geraden, teleskopierbaren Rohrabschnitt 3b in Strömungsrichtung verlängert ist. Damit kann die druckseitige Auslassöffnung 7 tiefer im Klärbecken 1 angeordnet werden und das Umwälzorgan 500 tiefere Wasserschichten im Klärbecken 1 umwirbeln. Das Strömungsrohr 3 kann damit in seiner axialen Länge frei gewählt werden. Zwischen dem Tragarm 12 und dem Querträger 16 ist eine teleskopierbare Stabilisierungsstange 30, 31 angeordnet, dessen oberer Teil 30 den unteren Teil 31 übergreift. Weiterhin umfasst das Strömungsrohr 3 einen Einsaugtrichter 9 an seinen saugseitigen Endbereich 23.

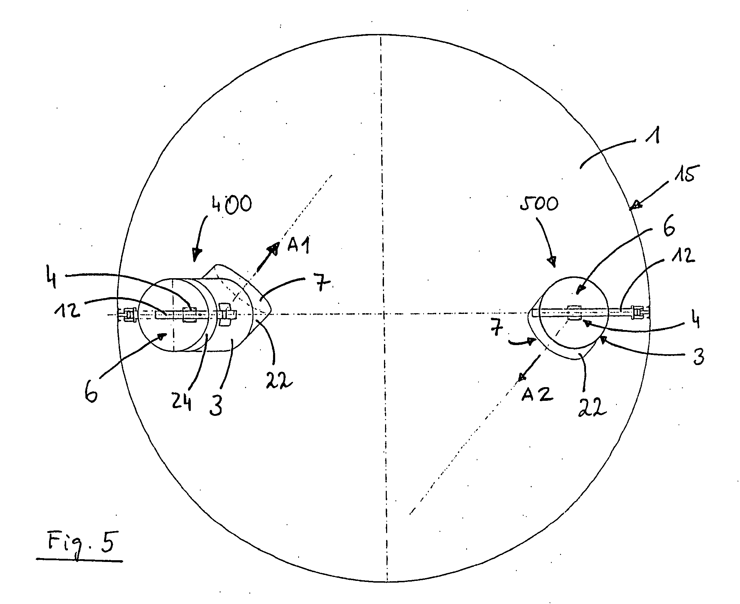

Figur 5 zeigt eine Ansicht auf ein Klärbecken 1 mit zwei darin angeordneten Umwälzorganen 400, 500 von oben. Es wird deutlich, dass die beiden Umwälzorgane 400, 500 diametral gegenüberliegend in dem Klärbecken 1 angeordnet sind. Die von den Umwälzorganen 400 und 500 erzeugten Strömungen A1, A2 liegen parallel zueinander und sind entgegengesetzt gerichtet, so dass sich eine rechtszirkulierende Gesamtströmung im Klärbecken 1 ausbildet. Damit wird das gesamte Abwasser in dem Klärbecken 1 stets in Bewegung gehalten, so dass eine gute Durchmischung und homogene Verteilung der Aufwuchskörper im Klärbecken 1 gewährleistet ist.

## Patentansprüche

1. Verfahren zur Verwirbelung von Aufwuchskörpem (8) in einem mit Abwasser gefüllten Klärbecken (1), in dem eine Totzone (2) schwimmender Aufwuchskörper (8) gebildet ist und in dem zumindest ein Umwälzorgan (100, 200, 400, 500) angeordnet ist, **dadurch gekennzeichnet, dass** das Umwälzorgan (100, 200, 400, 500) in einem Abstand von mindestens 30cm unterhalb der Wasseroberfläche über eine parallel zur Wasseroberfläche (10) ausgerichtete Saugöffnung (6) eines Strömungsrohres (3) die Aufwuchskörper (8) aus der Totzone (2) absaugt und durch eine druckseitige Öffnung (7) des Strömungsrohres (3) in den mittleren und/ oder unteren Bereich des Klärbeckens (1) einbringt, wobei das Umwälzorgan (100, 200, 400, 500) zur Beibehaltung des Abstands zwischen Saugöffnung (6) und Wasseroberfläche (10) in Abhängigkeit des Wasserstands nachgeführt wird.

2. Verfahren nach Anspruch 1, **dadurch gekennzeichnet, dass** das Umwälzorgan (100, 200, 400, 500) an zumindest einer Führungsstange (13) beweglich geführt wird.

3. Verfahren nach einem der vorherigen Ansprüche , **dadurch gekennzeichnet, dass** die aus dem Strömungsrohr (3) austretende Strömung (A, A1, A2) senkrecht oder schräg nach unten gerichtet ist.

4. Mit Abwasser gefülltes Klärbecken (1), in dem verwirbelbare Aufwuchskörper (8) in einer Totzone (2) schwimmen und in dem zumindest ein Umwälzorgan (100, 200, 400, 500) zur Verwirbelung der Aufwuchskörper (8) angeordnet ist, **dadurch gekennzeichnet, dass** das Umwälzorgan (100, 200, 400, 500) ein Strömungsrohr (3) umfasst, in dem eine Tauchmotorpumpe angeordnet ist, wobei sich das Strömungsrohr (3) zumindest teilweise in der Totzone (2) befindet und eine Saugöffnung (6) aufweist, die parallel zur Wasseroberfläche (10) ausgerichtet und in einem Abstand zur Wasseroberfläche (10) von mindestens 30 cm angeordnet ist, und dass das Strömungsrohr (3) eine druckseitige Öffnung (7) außerhalb der Totzone (2) aufweist, durch die die abgesaugten Aufwuchskörper (8) in den mittleren oder unteren Bereich des Klärbeckens (1) einbringbar sind, wobei das Umwälzorgan (100, 200, 400, 500) zur Beibehaltung des Abstands zwischen Saugöffnung (6) und Wasseroberfläche (10) in Abhängigkeit des Wasserstands nachführbar ist.

5. Klärbecken (1) nach Anspruch 4, **dadurch gekennzeichnet, dass** das Umwälzorgan (100, 200, 400, 500) mit der Achse eines geraden Abschnitts des Strömungsrohres (3) zur Wasseroberfläche (10) senkrecht angeordnet ist.

6. Klärbecken (1) nach Anspruch 5, **dadurch gekennzeichnet, dass** das Umwälzorgan (100, 200, 400, 500) mit der Achse eines geraden Abschnitts (3a) des Strömungsrohres (3) zur Wasseroberfläche (10) winklig angeordnet ist, wobei der saugseitige Endabschnitt (23) des Strömungsrohres (3) derart gekrümmt ist, dass die Saugöffnung (6) parallel zur Wasseroberfläche (10) ausgerichtet ist.

7. Klärbecken (1) nach einem der Anspruch 4 bis 6, **dadurch gekennzeichnet, dass** das Strömungsrohr (3) des Umwälzorgans (100, 200, 400, 500) einen gekrümmten druckseitigen Endabschnitt (22) aufweist.

8. Klärbecken (1) nach einem der Anspruch 4 bis 7, **dadurch gekennzeichnet, dass** das Umwälzorgan (100, 200, 400, 500) mittels einer Haltevorrichtung (11, 12, 13, 14, 16, 19) an der Wand (15) des Klärbeckens (1) befestigt oder befestigbar ist.

9. Klärbecken (1) nach Anspruch 8, **dadurch gekennzeichnet, dass** die Haltevorrichtung (11, 12, 13, 14, 16, 19) zumindest eine Führungsstange (13) umfasst, an der das Umwälzorgan (100, 200, 400, 500) beweglich geführt ist.

10. Klärbecken (1) nach Anspruch 9, **dadurch gekennzeichnet, dass** das Umwälzorgan (100, 200, 400, 500) von einem Haltemittel (18), insbesondere einem Seil oder einer Kette, gehalten und an der Führungsstange (13) gleitend geführt ist.

11. Klärbecken (1) nach einem der Ansprüche 8 bis 10, **dadurch gekennzeichnet, dass** die Haltevorrichtung (11, 12, 13, 14, 16, 19) Rahmenelemente (19, 19a, 20a) umfasst, mittels derer das Umwälzorgan (100, 200, 400, 500) an die Wand (15) des Klärbeckens (1) angehängt werden kann.

12. Klärbecken (1) nach einem der Ansprüche 4 bis 11, **dadurch gekennzeichnet, dass** in ihm zwei oder mehr Umwälzorgane (100, 200, 400, 500 zur Durchführung des Verfahrens nach einem der Ansprüche 1 bis 4 angeordnet sind.

13. Klärbecken (1) nach einem der Ansprüche 4 bis 12, **dadurch gekennzeichnet, dass** das Strömungsrohr (3) teleskopierbar ist.

14. Klärbecken (1) nach einem der Ansprüche 4 bis 13, **dadurch gekennzeichnet, dass** der druckseitige Endbereich (22) um die Achse des Umwälzorgans (200, 400, 500) schwenkbar ist, um die Richtung der druckseitigen Strömung (A1, A2) zu variieren.

15. Verwendung eines Umwälzorgans (100, 200, 400, 500) in einem mit Abwasser gefüllten Klärbecken (1), in dem verwirbelbare Aufwuchskörper (8) in einer Totzone (2) schwimmen, wobei das Umwälzorgan (100, 200, 400, 500) ein Strömungsrohr (3) umfasst, in dem eine Tauchmotorpumpe angeordnet ist und das eine Saugöffnung (6) aufweist, die parallel zur Wasseroberfläche (10) ausgerichtet und in einem Abstand zur Wasseroberfläche (10) von mindestens 30 cm angeordnet ist, wobei das Strömungsrohr (3) eine druckseitige Öffnung (7) außerhalb der Totzone (2) aufweist, durch die die abgesaugten Aufwuchskörper (8) in den mittleren oder unteren Bereich des Klärbeckens (1) eingebracht werden, und wobei das Umwälzorgan (100, 200, 400, 500) zur Beibehaltung des Abstands zwischen Saugöffnung (6) und Wasseroberfläche (10) in Abhängigkeit des Wasserstands nachführbar ist.

## Claims

1. Method of swirling growth bodies (8) in a wastewater-filled clarification tank (1) in which a dead zone (2) of floating growth bodies (8) is formed and in which at least one circulating mechanism (100, 200, 400, 500) is arranged, **characterized in that** the circulating mechanism (100, 200, 400, 500) extracts the growth bodies (8) from the dead zone (2) by suction, at a distance of at least 30 cm beneath the water surface, via a suction opening (6) of a flow tube (3), this suction opening being oriented parallel to the water surface (10), and introduces the same into the central and/or lower region of the clarification tank (1) through a pressure-side opening (7) of the flow tube (3), wherein the circulating mechanism (100, 200, 400, 500) is adjusted in dependence on the water level in order for the distance between the suction opening (6) and water surface (10) to be maintained.

2. Method according to Claim 1, **characterized in that** the circulating mechanism (100, 200, 400, 500) is guided in a movable manner on at least one guide rod (13).

3. Method according to one of the preceding claims, **characterized in that** the flow (A, A1, A2) passing out of the flow tube (3) is directed vertically or obliquely downwards.

4. Wastewater-filled clarification tank (1) in which growth bodies (8) which can be subjected to swirling action float in a dead zone (2) and in which is arranged at least one circulating mechanism (100, 200, 400, 500) for swirling the growth bodies (8), **characterized in that** the circulating mechanism (100, 200, 400, 500) comprises a flow tube (3) in which an underwater pump is arranged, wherein the flow tube (3) is located, at least in part, in the dead zone (2) and has a suction opening (6) which is oriented parallel to the water surface (10) and is arranged at a distance of at least 30 cm from the water surface (10), and **in that** the flow tube (3) has a pressure-side opening (7) outside the dead zone (2), through which the growth bodies (8) which have been extracted by suction can be introduced into the central or lower region of the clarification tank (1), wherein the circulating mechanism (100, 200, 400, 500) can be adjusted in dependence on the water level in order for the distance between the suction opening (6) and water surface (10) to be maintained.

5. Clarification tank (1) according to Claim 4, **characterized in that** the circulating mechanism (100, 200, 400, 500) has the axis of a rectilinear portion of the flow tube (3) arranged perpendicularly to the water surface (10).

6. Clarification tank (1) according to Claim 5, **characterized in that** the circulating mechanism (100, 200, 400, 500) has the axis of a rectilinear portion (3a) of the flow tube (3) arranged at an angle to the water surface (10), wherein the suction-side end portion (23) of the flow tube (3) is curved such that the suction opening (6) is oriented parallel to the water surface (10).

7. Clarification tank (1) according to one of Claims 4 to 6, **characterized in that** the flow tube (3) of the circulating mechanism (100, 200, 400, 500) has a curved pressure-side end portion (22).

8. Clarification tank (1) according to one of Claims 4 to 7, **characterized in that** the circulating mechanism (100, 200, 400, 500) is, or can be, fastened on the wall (15) of the clarification tank (1) by means of a retaining arrangement (11, 12, 13, 14, 16, 19).

9. Clarification tank (1) according to Claim 8, **characterized in that** the retaining arrangement (11, 12, 13, 14, 16, 19) comprises at least one guide rod (13), on which the circulating mechanism (100, 200, 400, 500) is guided in a movable manner.

10. Clarification tank (1) according to Claim 9, **characterized in that** the circulating mechanism (100, 200, 400, 500) is retained by a retaining means (18), in particular a cable or a chain, and is guided with sliding action on the guide rod (13).

11. Clarification tank (1) according to one of Claims 8 to 10, **characterized in that** the retaining arrangement (11, 12, 13, 14, 16, 19) comprises frame elements (19, 19a, 20a) by means of which the circulating mechanism (100, 200, 400, 500) can be suspended on the wall (15) of the clarification tank (1) .

12. Clarification tank (1) according to one of Claims 4 to 11, **characterized in that** two or more circulating mechanisms (100, 200, 400, 500) are arranged therein in order to implement the method according to one of Claims 1 to 3.

13. Clarification tank (1) according to one of Claims 4 to 12, **characterized in that** the flow tube (3) is telescopic.

14. Clarification tank (1) according to one of Claims 4 to 13, **characterized in that** the pressure-side end region (22) can be pivoted about the axis of the circulating mechanism (200, 400, 500) in order for the direction of the pressure-side flow (A1, A2) to be varied.

15. Use of a circulating mechanism (100, 200, 400, 500) in a wastewater-filled clarification tank (1) in which growth bodies (8) which can be subjected to swirling action float in a dead zone (2), wherein the circulating mechanism (100, 200, 400, 500) comprises a flow tube (3) in which an underwater pump is arranged and which has a suction opening (6) which is oriented parallel to the water surface (10) and is arranged at a distance of at least 30 cm from the water surface (10), wherein the flow tube (3) has a pressure-side opening (7) outside the dead zone (2), through which the growth bodies (8) which have been extracted by suction are introduced into the central or lower region of the clarification tank (1), and wherein the circulating mechanism (100, 200, 400, 500) can be adjusted in dependence on the water level in order for the distance between the suction opening (6) and water surface (10) to be maintained.

## Revendications

1. Procédé de tourbillonnement de corps de croissance (8) dans un bassin d'épuration (1) rempli d'eau usée, dans lequel est formée une zone morte (2) de corps de croissance (8) en suspension, et dans lequel est disposé au moins un organe de circulation (100, 200, 400, 500), **caractérisé en ce que** l'organe de circulation (100, 200, 400, 500) aspire, à une distance d'au moins 30 cm en dessous de la surface de l'eau, par le biais d'une ouverture d'aspiration (6) d'un tube d'écoulement (3) orientée parallèlement à la surface de l'eau (10), les corps de croissance (8) hors de la zone morte (2), et les introduit par une ouverture (7) côté pression du tube d'écoulement (3) dans la région centrale et/ou inférieure du bassin d'épuration (1), l'organe de circulation (100, 200, 400, 500) étant adapté en fonction du niveau de l'eau de manière à conserver la distance entre l'ouverture d'aspiration (6) et la surface de l'eau (10).

2. Procédé selon la revendication 1, **caractérisé en ce que** l'organe de circulation (100, 200, 400, 500) est guidé de manière déplaçable sur au moins une barre de guidage (13).

3. Procédé selon l'une quelconque des revendications précédentes, **caractérisé en ce que** l'écoulement (A, A1, A2) sortant du tube d'écoulement (3) est orienté perpendiculairement ou obliquement vers le bas.

4. Bassin d'épuration (1) rempli d'eau usée, dans lequel des corps de croissance (8) pouvant être mis en tourbillon sont en suspension dans une zone morte (2) et dans lequel au moins un organe de circulation (100, 200, 400, 500) est disposé de manière à faire tourbillonner les corps de croissance (8), **caractérisé en ce que** l'organe de circulation (100, 200, 400, 500) comprend un tube d'écoulement (3) dans lequel est disposée une pompe à moteur submersible, le tube d'écoulement (3) se trouvant au moins en partie dans la zone morte (2) et présentant une ouverture d'aspiration (6), qui est orientée parallèlement à la surface de l'eau (10) et qui est disposée à une distance d'au moins 30 cm de la surface de l'eau (10), et **en ce que** le tube d'écoulement (3) présente une ouverture côté pression (7) en dehors de la zone morte (2), à travers laquelle les corps de croissance aspirés (8) peuvent être introduits dans la région centrale ou inférieure du bassin d'épuration (1), l'organe de circulation (100, 200, 400, 500) étant adapté en fonction du niveau de l'eau de manière à conserver la distance entre l'ouverture d'aspiration (6) et la surface de l'eau (10).

5. Bassin d'épuration (1) selon la revendication 4, **caractérisé en ce que** l'organe de circulation (100, 200, 400, 500) est disposé perpendiculairement, suivant l'axe d'une portion droite du tube d'écoulement (3), à la surface de l'eau (10).

6. Bassin d'épuration (1) selon la revendication 5, **caractérisé en ce que** l'organe de circulation (100, 200, 400, 500) est disposé, suivant l'axe d'une portion droite (3a) du tube d'écoulement (3), suivant un angle par rapport à la surface de l'eau (10), la portion d'extrémité côté aspiration (23) du tube d'écoulement (3) étant courbée de telle sorte que l'ouverture d'aspiration (6) soit orientée parallèlement à la surface de l'eau (10).

7. Bassin d'épuration (1) selon l'une quelconque des revendications 4 à 6, **caractérisé en ce que** le tube d'écoulement (3) de l'organe de circulation (100, 200, 400, 500) présente une portion d'extrémité côté pression (22) courbe.

8. Bassin d'épuration (1) selon l'une quelconque des revendications 4 à 7, **caractérisé en ce que** l'organe de circulation (100, 200, 400, 500) est fixé ou peut être fixé au moyen d'un dispositif de fixation (11, 12, 13, 14, 16, 19) à la paroi (15) du bassin d'épuration (1).

9. Bassin d'épuration (1) selon la revendication 8, **caractérisé en ce que** le dispositif de fixation (11, 12, 13, 14, 16, 19) comprend au moins une barre de guidage (13) sur laquelle est guidé de manière déplaçable l'organe de circulation (100, 200, 400, 500).

10. Bassin d'épuration (1) selon la revendication 9, **caractérisé en ce que** l'organe de circulation (100, 200, 400, 500) est maintenu par un moyen de fixation (18), notamment un câble ou une chaîne, et est guidé par coulissement sur la barre de guidage (13).

11. Bassin d'épuration (1) selon l'une quelconque des revendications 8 à 10, **caractérisé en ce que** le dispositif de fixation (11, 12, 13, 14, 16, 19) comprend des éléments de cadre (19, 19a, 20a) au moyen desquels l'organe de circulation (100, 200, 400, 500) peut être accroché à la paroi (15) du bassin d'épuration (1).

12. Bassin d'épuration (1) selon l'une quelconque des revendications 4 à 11, **caractérisé en ce que** deux ou plus de deux organes de circulation (100, 200, 400, 500) sont disposés dans celui-ci, afin de mettre en oeuvre le procédé selon l'une quelconque des revendications 1 à 3.

13. Bassin d'épuration (1) selon l'une quelconque des revendications 4 à 12, **caractérisé en ce que** le tube d'écoulement (3) est télescopique.

14. Bassin d'épuration (1) selon l'une quelconque des revendications 4 à 13, **caractérisé en ce que** la région d'extrémité côté pression (22) peut être pivotée autour de l'axe de l'organe de circulation (200, 400, 500), afin de faire varier l'orientation de l'écoulement côté pression (A1, A2).

15. Utilisation d'un organe de circulation (100, 200, 400, 500) dans un bassin d'épuration (1) rempli d'eau usée, dans lequel des corps de croissance (8) pouvant être mis en tourbillon sont en suspension dans une zone morte (2), l'organe de circulation (100, 200, 400, 500) comprenant un tube d'écoulement (3), dans lequel est disposée une pompe à moteur submersible et qui présente une ouverture d'aspiration (6) qui est orientée parallèlement à la surface de l'eau (10) et qui est disposée à une distance d'au moins 30 cm de la surface de l'eau (10), le tube d'écoulement (3) présentant une ouverture côté pression (7) en dehors de la zone morte (2), à travers laquelle les corps de croissance aspirés (8) sont introduits dans la région centrale ou inférieure du bassin d'épuration (1), et l'organe de circulation (100, 200, 400, 500) pouvant être adapté en fonction du niveau de l'eau de manière à conserver la distance entre l'ouverture d'aspiration (6) et la surface de l'eau (10).
